# EUROPÄISCHE PATENTSCHRIFT

(11) **EP 3 587 163 B1**
(45) Veröffentlichungstag und Bekanntmachung des Hinweises auf die Patenterteilung: **30.07.2025**
(21) Anmeldenummer: 19181289.0
(22) Anmeldetag: 19.06.2019
(51) Int. Cl.: B60L 1/00, B66F 9/06

(54) **ARBEITSFAHRZEUG MIT ELEKTRISCHEM ENERGIESPEICHER**
WORKING VEHICLE WITH A ELECTRIC ENERGY STORAGE DEVICE
VÉHICULE DE TRAVAIL DOTÉ D'UN DISPOSITIF DE STOCKAGE D'ÉNERGIE ÉLECTRIQUE

(30) Priorität: 22.06.2018 DE 102018115036
(43) Veröffentlichungstag der Anmeldung: 01.01.2020
(73) Patentinhaber: Weidemann GmbH, 34519 Diemelsee-Flechtdorf (DE)
(72) Erfinder: RADTKE, Fabian, 34497 Korbach (DE); PRECHEL, Jan, 34497 Korbach (DE)
(74) Vertreter: Müller Hoffmann & Partner

(56) Entgegenhaltungen:
- EP-A1- 3 103 666
- DE-A1- 102017 004 006
- US-A1- 2010 297 926
- US-A1- 2011 233 931
- US-A1- 2014 332 294
- US-B2- 8 978 800
- STRATEGIC FORUM FOR CONSTRUCTION: "Safe Use of Telehandlers in Construction Second Revision", March 2015 (2015-03-01), London, pages 1 - 103, XP093093425, Retrieved from the Internet <URL:https://www.highwayssafetyhub.com/uploads/5/1/2/9/51294565/2d_-_guidance_on_safe_use_of_telehandlers.pdf> [retrieved on 20231020]

## Beschreibung

Die Erfindung betrifft ein Arbeitsfahrzeug mit einem Fahrzeugrahmen, der von zwei Achsen getragen ist, einer Fahrerkabine und einem Hubarm. Der Hubarm ist entlang einer Längsrichtung des Arbeitsfahrzeugs im Wesentlichen parallel zu einer Längsachse des Fahrzeugrahmens angeordnet. Die Fahrerkabine ist zu einer ersten Seite der Längsachse zwischen den Achsen angeordnet.

Derartige Arbeitsfahrzeuge sind bekannt und werden üblicherweise auch als Teleskoplader bezeichnet. Sie werden häufig in der Landwirtschaft oder im Baugewerbe genutzt, um Material zu transportieren. Dabei können sie mittels ihres teleskopierbaren Arms Material nicht nur am Boden versetzen, sondern dieses auch in der Höhe absetzen, beispielsweise um ein Transportfahrzeug zu beladen. Ferner sind auch Varianten bekannt, die keinen teleskopierbaren Arm aufweisen, aber wegen ihrer ansonsten übereinstimmenden Bauweise in die gleiche Kategorie von Baumaschinen fallen.

Aus der US 8 978 800 B2 ist ein Arbeitsfahrzeug bekannt, mit einem Energiemodul, das mehrere Energievorrichtungen aufweist, die an einem Fahrzeugrahmen verteilt einbaubar sind.

Bei solchen Arbeitsfahrzeugen ist die Stabilität des Fahrzeugs von großer Bedeutung. Durch den verschwenkbaren und insbesondere teleskopierbaren, d.h. ausfahrbaren Arm verlagert sich beim Anheben des Armes der Schwerpunkt, so dass gefährliche Situationen entstehen können. Insbesondere auch dadurch, dass diese Maschinen häufig auf unbefestigtem und unebenem Untergrund eingesetzt werden. Auch bei Arbeitsfahrzeugen ohne teleskopierbaren Hubarm, d.h. mit fester Länge, entsteht durch ein Anheben des Armes mit geladener Last die Gefahr des Umkippens. Ferner besteht der Trend dahingehend, dass Arbeitsmaschinen mit umweltfreundlichen Antrieben ausgerüstet werden.

Es ist deshalb Aufgabe der Erfindung, ein Arbeitsfahrzeug mit verbesserter Stabilität und fortschrittlichem Antriebsstrang auszustatten.

Die Aufgabe wird gelöst durch ein Arbeitsfahrzeug mit den Merkmalen des Anspruchs 1. Vorteilhafte Weiterentwicklungen sind in den Unteransprüchen angegeben.

Das erfindungsgemäße Arbeitsfahrzeug umfasst einen Fahrzeugrahmen, der von zwei Achsen getragen ist, eine Fahrerkabine, einen Hubarm sowie mindestens eine elektrische Energiespeichereinheit, wobei der Hubarm entlang einer Längsrichtung des Arbeitsfahrzeugs ist und die Fahrerkabine zu einer ersten Seite der Längsachse zwischen den Achsen angeordnet ist, und wobei mindestens eine Energiespeichereinheit zwischen den Achsen zu einer zweiten Seite der Längsachse angeordnet ist, die der ersten Seite gegenüber liegt. Als Hubarm ist ein Arm zu verstehen, an dessen Ende eine Werkzeugaufnahme angeordnet ist, zum wechselnden Anbringen von Arbeitswerkzeugen wie beispielsweise einer Palettengabel oder Schaufel. Der Hubarm kann in fester Länge oder auch als Teleskoparm ausgebildet sein. Ein Teleskoparm ist aus mindestens einem hohlen äußeren Arm gebildet, in dessen Hohlraum mindestens ein weiteres Armelement eingeschoben und ausfahrbar ist. Die beiden Achsen sind beabstandet zueinander am Fahrzeugrahmen angeordnet und jeweils einer Fahrzeugfront und einem Fahrzeugheck zugeordnet. Zwischen den Achsen ist ein Raum gebildet, in dem andere Elemente des Arbeitsfahrzeugs angeordnet sein können. Die Achsen sind also entlang der Fahrzeuglängsachse beabstandet angeordnet, so dass dazwischen ein Abstand besteht. Als Achsen werden nicht ausschließlich tragende Achsen, im Sinne eines Bauteils, welches sich über eine Breite des Fahrzeugs erstreckt, verstanden. Als Achsen sind auch Drehachsen der Räder zu verstehen. Bei dreirädrigen Arbeitsfahrzeugen beispielsweise können zwei Räder auf einer gemeinsamen Drehachse angeordnet sein, wobei das dritte Rad um eine eigene Drehachse dreht und so ebenfalls alle zuvor genannten Merkmale der beiden Achsen erfüllt sind. Ebenfalls sind auch bei Arbeitsfahrzeugen mit vier einzeln aufgehängten Rädern zwei Drehachsen ausgebildet, die als Achsen anzusehen sind.

In einer Variante kann sich der Hubarm mit einem ersten Ende über den Fahrzeugrahmen hinaus erstrecken und am einem zweiten Ende mit einem Befestigungsbereich verschwenkbar mit dem Fahrzeugrahmen verbunden sein.

Vorteilhaft ist, wenn der Befestigungsbereich in einer Hauptfahrtrichtung näher an einem Fahrzeugheck als an einer Fahrzeugfront angeordnet ist. Das Fahrzeugheck und Fahrzeugfront sind durch die Hauptfahrtrichtung definiert. Die Hauptfahrtrichtung ist diejenige Richtung, in die ein Fahrer in der Fahrerkabine sitzend blickt, d.h. in die die Fahrerkabine ausgerichtet ist.

Vorgesehen sein kann auch, dass eine elektrisch angetriebene hydraulische Pumpe für die Arbeitsfunktionen des Arbeitsfahrzeugs bezogen auf die Längsachse des Fahrzeugrahmens auf der anderen Seite als die mindestens eine Energiespeichereinheit angeordnet ist. Die Arbeitsfunktionen sind dabei das Heben und Senken der Arms sowie dessen Ein- und Ausfahrbewegung. Daneben können je nach Ausstattung des Arbeitsfahrzeugs noch weitere Funktionen vorgesehen sein, wie z.B. hydraulische Anbaugeräte am Arm.

In einer Ausführungsform kann die hydraulische Pumpe für die Arbeitsfunktion mittels eines Elektromotors antreibbar sein, wobei eine Motorwelle des Elektromotors quer zur Längsachse des Fahrzeugrahmens angeordnet ist. Die Positionierung des Elektromotos quer zur Längsachse bietet eine gute Ausnutzung des begrenzten Bauraumes. Besonders vorteilhaft hat sich erwiesen, wenn der Elektromotor ebenfalls zwischen den beiden Achsen angeordnet ist.

Es kann vorgesehen sein, dass die Energiespeichereinheit von einer Abdeckung überdeckt ist, und von der Abdeckung ferner mindestens eine elektrische oder elektronische Komponente, wie beispielsweise eine elektronische Steuerung, ein Schütz, ein Laderegler, ein Batteriemanagementsystem, ein Frequenzumrichter, oder ein Spannungswandler überdeckt ist. Als Überdeckung ist insbesondere zu verstehen, wenn das jeweilige Element von herabfallenden Gegenständen und bevorzugt von äußeren Einflüssen, wie z.B. dem Wetter geschützt ist. Als elektrische oder elektronische Komponente ist ein Bauelement zu verstehen, welche einen Strom schaltet und/oder verändert oder elektrische Signale für die Funktion des Arbeitsfahrzeugs verarbeitet, erzeugt und/oder weiterleitet.

Ferner kann der Fahrzeugrahmen einen Aufnahmeraum für die mindestens eine Energiespeichereinheit aufweisen, wobei der Aufnahmeraum eine Rückwand aufweist, die im Wesentlichen parallel zur Längsachse des Fahrzeugrahmens verläuft, eine erste Seitenwand und eine zweite Seitenwand, wobei die beiden Seitenwände im Wesentlichen quer zur Längsachse des Fahrzeugrahmens verlaufen, sowie einen Boden aufweist, wobei eine Oberseite und/oder eine Vorderseite zumindest bereichsweise mittels einer beweglichen Abdeckung gebildet sind. Die Rückwand kann auch eine Seitenwand oder Element des Rahmens sein.

Insbesondere kann das Arbeitsfahrzeug dadurch gekennzeichnet sein, dass die Arbeitshydraulik und mindestens eine Achse ausschließlich mittels mindestens eines Elektromotors angetrieben sind. Die Arbeitshydraulik und die eine Achse können dabei mittels eines einzigen Elektromotors angetrieben werden, beispielsweise mittels einer angetriebenen Hydraulikpumpe, die sowohl ein hydrostatisches Getriebe als auch die Arbeitshydraulik versorgt. Ferner kann aber auch vorgesehen sein, dass mehr als lediglich ein Elektromotor vorgesehen ist. Die Achse kann sowohl direkt mittels eines Elektromotors angetrieben sein, beispielsweise mittels einer Gelenkwelle oder auch direkt, wobei der Elektromotor beispielsweise am Differential oder in einer Radnabe angeordnet ist.

Offenbart wird ferner ein Arbeitsfahrzeug, das dadurch gekennzeichnet ist, dass eine Position der mindestens einen Energiespeichereinheit entlang der Längsachse des Fahrzeugrahmens derart gewählt ist, dass eine Gewichtskraft der Energiespeichereinheit zu mehr als 50% auf die zweite Achse wirkt. Bevorzugt kann die Gewichtskraft der Energiespeichereinheit zu mindestens 60%, besonders bevorzugt zu mindestens 70% auf die zweite Achse wirken. Bedingt durch die Bauart sind erfindungsgemäße Arbeitsfahrzeuge bei deren Nutzung der Gefahr ausgesetzt nach vorne zu kippen, wenn der Arm belastet und ggf. ausgefahren ist. Es ist deshalb vorteilhaft, das Gewicht der Energiespeichereinheit als Gegengewicht zu nutzen. Dies kann dadurch erreicht werden, dass deren Position näher am Fahrzeugheck gewählt ist als an der Fahrzeugfront.

Als vorteilhaft hat sich erwiesen, wenn eine Motorwelle eines elektrischen Motors für einen Fahrantrieb des Arbeitsfahrzeugs im Wesentlichen parallel zur Längsachse des Fahrzeugrahmens angeordnet ist. Mit dieser Anordnung kann die Antriebskraft besonders effizient auf die Achsen übertragen werden. Als im Wesentlichen parallel wird eine Ausrichtung der Motorwelle angesehen, die eine maximale Abweichung von 5 Grad zur Längsachse aufweist.

Diese und weitere Vorteile und Merkmale der Erfindung werden nachfolgend anhand von Beispielen unter Zuhilfenahme der begleitenden Figuren näher erläutert. Es zeigen:
Fig. 1 eine schematische Seitenansicht eines erfindungsgemäßen Arbeitsfahrzeugs;

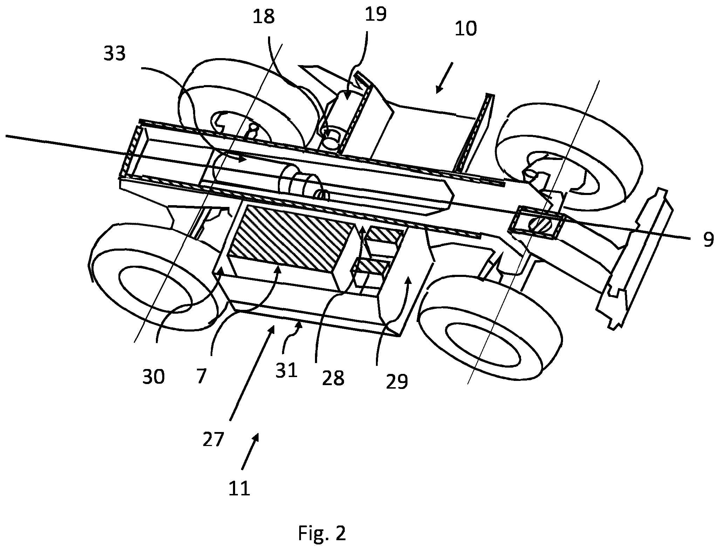

Fig. 2 eine schematische perspektivische Schnittdarstellung eines Arbeitsfahrzeugs;

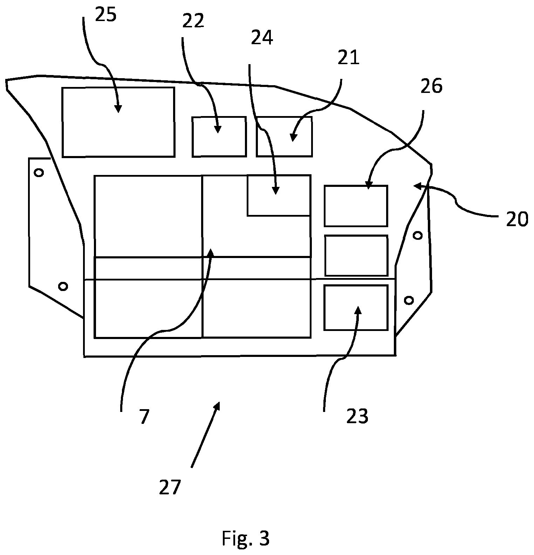

Fig. 3 eine schematische Seitenansicht eines Aufnahmebereichs der Energiespeichereinheit,
Fig. 4 eine schematische Ansicht des Arbeitsfahrzeugs von unten.

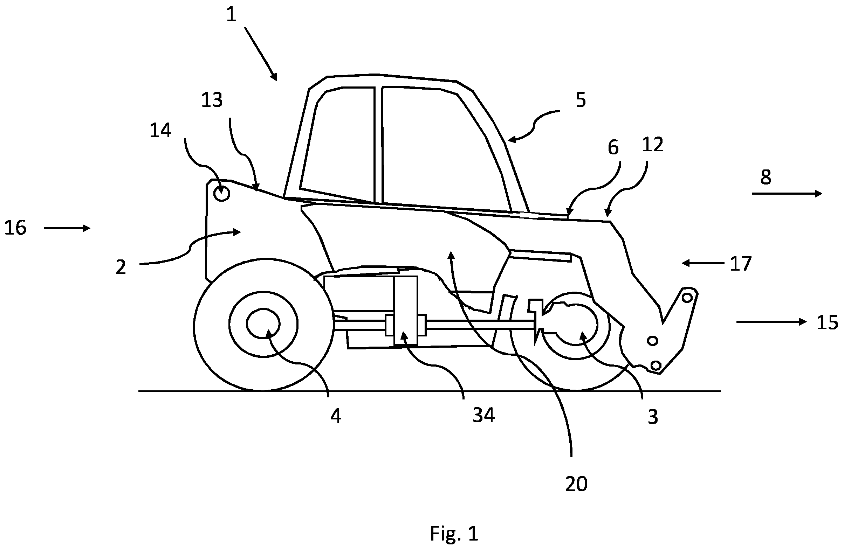

Wie in Figur 1 zu sehen, umfasst ein erfindungsgemäßes Arbeitsfahrzeug 1 einen Fahrzeugrahmen 2, an dem eine vordere erste Achse 3 und eine hintere zweite Achse 4 angeordnet sind. Die Begriffe vorne und hinten orientieren sich an der Hauptfahrtrichtung 15 des Arbeitsfahrzeugs. Am Fahrzeugrahmen ist ein Hubarm 6 angeordnet, der um eine Achse hydraulisch verschwenkbar ist, so dass dieser zwischen einer aufgerichteten und einer abgesenkten Position stufenlos einstellbar ist. Die Achse wird durch einen Bolzen gebildet, mittels welchem der Hubarm an seinem Befestigungsbereich 14 am Fahrzeugrahmen befestigt ist. Der Hubarm 6 verläuft im Wesentlichen parallel zur Längsachse 9 des Arbeitsfahrzeugs 1. Insbesondere verläuft der Hubarm im Wesentlichen parallel zu einer vertikalen Ebene, durch welche die Längsachse 9 verläuft.

Basierend auf der Hauptfahrtrichtung ergibt sich das Fahrzeugheck 16 als derjenige Bereich der in einem hinteren, oder rückwärtigen Bereich des Arbeitsfahrzeugs 1 liegt. Die Fahrzeugfront 17 ergibt sich durch denjenigen Bereich des Arbeitsfahrzeugs, der in Fahrtrichtung vorne liegt.

Im gezeigten Ausführungsbeispiel sind beide Achsen mittels eines zentralen Getriebes über Gelenkwellen angetrieben. Alternativ kann aber auch lediglich eine Achse angetrieben sein. Alternativ kann auch an jeder Achse oder an jeder Radnabe ein Antriebsmotor angeordnet sein.

Die erste 3 Achse ist in der Nähe der Fahrzeugfront 17, die zweite Achse 4 in Nähe des Fahrzeughecks angeordnet. Es ergibt sich dadurch ein Abstand zwischen den beiden Achsen 3,4.

Dar Arbeitsfahrzeug 1 umfasst ferner eine Fahrerkabine 5 welche einen Fahrerarbeitsplatz umfasst, so dass ein Bediener das Arbeitsfahrzeug sitzend bedienen kann. Die Fahrerkabine ist in Längsrichtung 8 gesehen zwischen der ersten Achse 3 und der zweiten Achse 4 angeordnet. Die Fahrerkabine muss nicht notwendigerweise geschlossen sein, sondern kann auch als offener Fahrerarbeitsplatz gestaltet sein, so dass lediglich ein Schutz vor herabfallenden Gegenständen (FOPS) und/oder vor einem Überschlag des Fahrzeugs (ROPS) gegeben ist. Die Fahrerkabine liegt zu einer Seite, d.h. neben der Längsachse 9. Im gezeigten Ausführungsbeispiel ist die Fahrerkabine 5 in Hauptfahrtrichtung 15 auf der linken Fahrzeugseite angeordnet, d.h. links der Längsachse 9. Neben der Fahrerkabine 5 erstreckt sich der Hubarm. Insbesondere erstreckt sich der Hubarm von der Fahrzeugfront an der Fahrerkabine vorbei in Richtung Fahrzeugheck. Der Befestigungsbereich 14 des Hubarms befindet sich also in Längsrichtung betrachtet hinter der Fahrerkabine.

Zur anderen Seite der Längsachse, d.h. gegenüberliegend zur Fahrerkabine ist die mindestens eine elektrische Energiespeichereinheit 7 angeordnet. Im gezeigten Ausführungsbeispiel ist die elektrische Energiespeichereinheit in Hauptfahrtrichtung 15 auf der rechten Fahrzeugseite angeordnet, d.h. rechts der Längsachse 9. Die elektrische Energiespeichereinheit 7 ist als wiederaufladbarer Akkumulator ausgebildet. Sie kann aus mehreren Energiespeichermodulen aufgebaut sein, so dass diese eine Energiespeichereinheit bilden. Insbesondere ist vorgesehen, dass die Energiespeichermodule vertikal übereinander angeordnet sind. Besonders bevorzugt sind mindestens zwei Energiespeichermodule in Längsrichtung des Arbeitsfahrzeugs nebeneinander angeordnet. Auf diese beiden Energiespeichermodule können dann weitere Energiespeichermodule angeordnet sein, so dass sich mindestens zwei nebeneinander positionierte Stapel von Energiespeichermodulen ergeben.

Die Energiespeichereinheit 7 ist in einem Aufnahmeraum 27 angeordnet, der mittels einer Rückwand 28, einer ersten Seitenwand 29 und einer zweiten Seitenwand 30 sowie einem Boden 31 begrenzt ist. Die Rückwand verläuft parallel zur Längsachse 9 des Arbeitsfahrzeugs und kann auch mittels eines Rahmens gebildet sein. Die Seitenwände 29, 30 verlaufen im Wesentlichen quer zur Längsachse 9 Insbesondere kann der Aufnahmeraum 27 als Wanne ausgebildet sein, in der die Energiespeichereinheit aufgenommen ist.

Der Aufnahmeraum 27 ist im gezeigten Ausführungsbeispiel mittels einer Abdeckung 20 versehen. Die Abdeckung 20 ist bevorzugt mittels mindestens einem Drehgelenk am Fahrzeugrahmen 2 und/oder an der Rückwand 28 angeordnet. Alternativ kann die Abdeckung auch an der ersten oder zweiten Seitenwand 29,30 befestigt sein. Die Abdeckung ist bevorzugt verschwenkbar angeordnet, um Zugang zum Aufnahmeraum 27 zu gewähren.

Alternativ kann die Abdeckung 20 auch abnehmbar gestaltet sein, so dass diese vom Arbeitsfahrzeug entfernt werden muss, um Zugang zum Aufnahmeraum 27 zu erhalten.

Die Abdeckung 20 ist derart geformt und angeordnet, dass die Energiespeichereinheit 7 von dieser überdeckt ist.

Bevorzugt ist die Grundfläche des Aufnahmeraums zu mindestens 50% von der Energiespeichereinheit eingenommen. Besonders bevorzugt nimmt die Energiespeichereinheit mindestens 60% der Grundfläche des Aufnahmeraums ein. Als Grundfläche wird die Fläche angesehen, welche mittels der Rückwand 28 sowie der Seitenwände 29, 30 begrenzt wird.

Im Aufnahmeraum 27 sind im gezeigten Ausführungsbeispiel ferner noch elektrische Komponenten angeordnet. Die elektrischen Komponenten sind im gezeigten Ausführungsbeispiel eine elektronische Steuerung 21, ein Schütz 22, ein Laderegler 23, ein Batteriemanagementsystem 24, ein Frequenzumrichter 25 und ein Spannungswandler 26. Je nach gewählter Konfiguration der Energiespeichereinheit kann auf einzelne Komponenten verzichtet werden. Die elektronischen Komponenten können auch in gemeinsamen Gehäusen untergebracht sein. Diese müssen also nicht zwingend separat angeordnet sein.

Die elektronische Steuerung 21 kann dazu ausgelegt sein, die Funktionen des Arbeitsfahrzeugs zu regeln und/oder zu steuern. Der Schütz kann dazu ausgelegt sein, die Energiespeichereinheit von einem elektrischen Netz des Arbeitsfahrzeugs zu trennen. Dies ist insbesondere im Ruhezustand des Fahrzeugs sinnvoll oder auch bei Wartungs- und/oder Reparaturarbeiten am elektrischen Netz des Fahrzeugs. Der Laderegler 23 steuert und überwacht einen Ladevorgang der Energiespeichereinheit 7 und stellt die passende Spannung und/oder Stromstärke zur Ladung zur Verfügung. Das Batteriemanagementsystem überwacht die Energiespeichereinheit im Betrieb und während des Ladevorgangs. Der Frequenzumrichter 25 wandelt die Spannung der Energiespeichereinheit in die von dem mindestens einen Elektromotor benötigte Spannung. Die elektrischen Komponenten werden im Ausführungsbeispiel ebenfalls von der Abdeckung 20 überdeckt.

Im gezeigten Ausführungsbeispiel ist die Energiespeichereinheit 7 näher an der zweiten Achse 4 als an der ersten Achse 3 angeordnet. Mit dieser Anordnung wirkt die Gewichtskraft der Energiespeichereinheit 7 zum größeren Teil, d.h. zu mehr als 50% auf die zweite Achse 4 als auf die erste Achse 3.

Bevorzugt wirken mindestens 60% der Gewichtskraft der Energiespeichereinheit 7 auf die zweite Achse 4. Besonders bevorzugt mindestens 70%. Dies verbessert die Stabilität des Arbeitsfahrzeugs geben ein nach-Vorne-Kippen wenn Last auf dem Hubarm 6 aufgenommen wird.

**Ferner ist** die Gewichtsverteilung auch bezogen auf die Längsachse möglichst ausgeglichen. D.h. die Verteilung des Gewichts zwischen einer ersten Seite 10 der Längsachse 9 und einer zweiten Seite 11 der Längsachse 9 ist besonders bevorzugt ausgeglichen, d.h. beträgt zu jeder Seite 50% des Gesamtgewichts. Bevorzugt kann das Gewicht aber auch im Rahmen einer Toleranz von +/- 10% auf beiden Seiten abweichen, so dass beispielsweise auch eine Gewichtsverteilung zwischen erster und zweiter Seite 10, 11 von 40% zu 60% vorliegen kann. Als Gewicht wird das Gewicht der betriebsbereiten Arbeitsmaschine inklusive eines Fahrers in der Fahrerkabine mit einem Gewicht von 80 kg angesehen.

Die hydraulische Pumpe 18, welche die Arbeitsfunktionen des Arbeitsfahrzeugs antreibt, ist im gezeigten Ausführungsbeispiel auf derjenigen Seite der Längsachse 9 angeordnet, auf welcher auch die Fahrerkabine 5 angeordnet ist. Die Pumpe 18 wird mittels eines Elektromotors 19 angetrieben. Elektromotor 19 und Pumpe sind quer zur Längsachse 9 des Arbeitsfahrzeugs angeordnet. Das bedeutet, dass die Motorwelle des Elektromotors sowie die Welle der Pumpe 18 im Wesentlichen quer zur Längsachse 9 angeordnet sind. Bevorzugt sind Motor 19 und Pumpe 18 koaxial angeordnet. Im gezeigten Ausführungsbeispiel sind der Elektromotor 19 und Pumpe 18 hinter der Fahrerkabine 5 und in der Hauptfahrtrichtung gesehen vor der zweiten Achse 4 angeordnet. Besonders vorteilhaft ist, wenn Elektromotor 19 und Pumpe 18 tiefer als eine Sitzfläche des Fahrersitzes angeordnet sind.

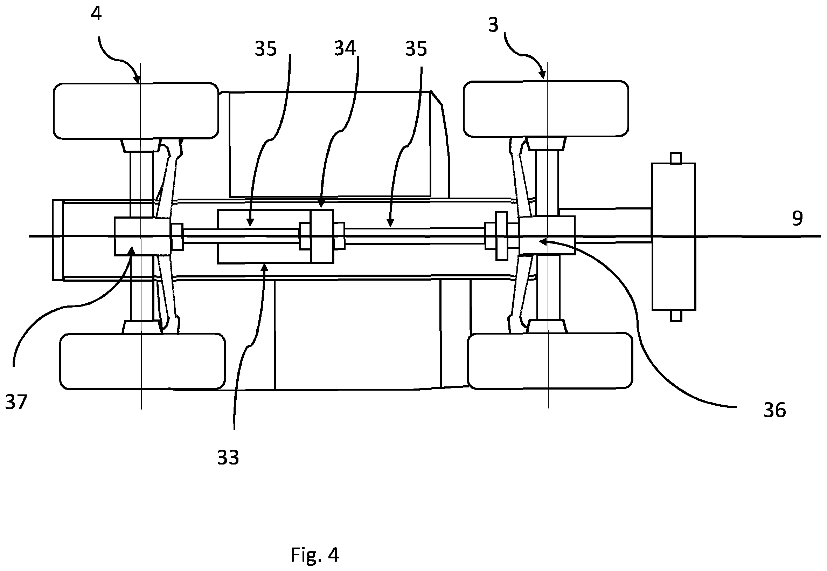

Figur 4 zeigt in der Ansicht von unten die Lage des Antriebs für den Fahrantrieb. Der Elektromotor 33 ist im Wesentlichen parallel zur Längsachse 9 angeordnet. Im gezeigten Ausführungsbeispiel ist er näher an der zweiten Achse 4 als an der ersten Achse 3 angeordnet. Dies ist vorteilhaft, da der Elektromotor 33 in dieser Position als Gegengewicht gegen ein Kippen des Arbeitsfahrzeugs dient. Der Elektromotor 33 wirkt auf ein Getriebe 34, an welches Gelenkwellen 35 angeordnet sind um das Drehmoment auf ein erstes Differential 36 an der ersten Achse 3 und ein zweites Differential 37 an der zweiten Achse 4 zu übertragen.

Das erfindungsgemäße Arbeitsfahrzeug 1 wird ausschließlich mittel elektrischer Energie angetrieben, welche in der mindestens einen elektrischen Energiespeichereinheit gespeichert ist. Das Arbeitsfahrzeug umfasst also insbesondere keinen Verbrennungsmotor. Die für einen Betrieb des Arbeitsfahrzeugs notwendige Energie wird also ausschließlich in Form von gespeicherter elektrischer Energie aus der mindestens einen Energiespeichereinheit bereitgestellt. Insbesondere wird eine Antriebsenergie für den Fahrantrieb und/oder andere Funktionen ausschließlich mittels elektrischer Energie aus der mindestens einen Energiespeichereinheit bereitgestellt.

## Patentansprüche

1. Arbeitsfahrzeug (1) umfassend einen Fahrzeugrahmen (2), der von einer ersten und einer zweiten Achse (3, 4) getragen ist, eine Fahrerkabine (5), einen Hubarm (6) sowie mindestens eine elektrische Energiespeichereinheit (7), wobei der Hubarm (6) entlang einer Längsrichtung (8) des Arbeitsfahrzeugs (1) angeordnet ist und die Fahrerkabine (5) zu einer ersten Seite (10) der Längsachse (9) zwischen den beiden Achsen (3, 4) angeordnet ist, und wobei mindestens eine Energiespeichereinheit (7) zwischen den beiden Achsen (3, 4) zu einer zweiten Seite (11) der Längsachse (9) angeordnet ist, die der ersten Seite (10) gegenüber liegt, wobei
- das Arbeitsfahrzeug ausschließlich mittels elektrischer Energie angetrieben wird und dass die elektrische Energie in der mindestens einen elektrischen Energiespeichereinheit (7) gespeichert ist;
**dadurch gekennzeichnet, dass**
- die Gewichtsverteilung bezogen auf die Längsachse ausgeglichen ist, derart, dass die Verteilung zu jeder Seite 50% des Gesamtgewichts beträgt, mit einer Toleranz von +/- 10%, wobei als Gewicht das Gewicht des betriebsbereiten Arbeitsfahrzeugs einschließlich eines Fahrers in der Fahrerkabine (2) mit einem Gewicht von 80 kg angesehen wird;
- eine elektrisch angetriebene hydraulische Pumpe (18) für die Arbeitsfunktionen des Arbeitsfahrzeugs (1) bezogen auf die Längsachse (9) des Fahrzeugrahmens (2) auf der anderen Seite (10, 11) als die mindestens eine Energiespeichereinheit (7) angeordnet ist; und dass
- die hydraulische Pumpe (18) für die Arbeitsfunktion mittels eines Elektromotors (19) antreibbar ist, wobei eine Motorwelle des Elektromotors (19) quer zur Längsachse (9) des Fahrzeugrahmens (2) angeordnet ist.

2. Arbeitsfahrzeug (1) nach Anspruch 1, **dadurch gekennzeichnet, dass** sich der Hubarm (6) mit einem ersten Ende (12) über den Fahrzeugrahmen (2) hinaus erstreckt und an einem zweiten Ende (13) mit einem Befestigungsbereich (14) verschwenkbar mit dem Fahrzeugrahmen (2) verbunden ist.

3. Arbeitsfahrzeug (1) nach Anspruch 1 oder 2, **dadurch gekennzeichnet, dass** der Befestigungsbereich (14) in einer Hauptfahrtrichtung (15) näher an einem Fahrzeugheck (16) als an einer Fahrzeugfront (17) angeordnet ist.

4. Arbeitsfahrzeug (1) nach einem der vorhergehenden Ansprüche, **dadurch gekennzeichnet, dass** die mindestens eine Energiespeichereinheit (7) von einer Abdeckung (20) überdeckt ist, und von der Abdeckung (20) ferner mindestens eine elektrische oder elektronische Komponente, wie beispielsweise eine elektronische Steuerung (21), ein Schütz (22), ein Laderegler (23), ein Batteriemanagementsystem (24), ein Frequenzumrichter (25), oder ein Spannungswandler (26) überdeckt ist.

5. Arbeitsfahrzeug (1) nach einem der vorhergehenden Ansprüche, **dadurch gekennzeichnet, dass** der Fahrzeugrahmen (2) einen Aufnahmeraum (27) für die mindestens eine Energiespeichereinheit (7) aufweist, wobei der Aufnahmeraum eine Rückwand (28) aufweist, die im Wesentlichen parallel zur Längsachse (9) des Fahrzeugrahmens (2) verläuft, eine erste Seitenwand (29) und eine zweite Seitenwand (30), wobei die beiden Seitenwände (29, 30) im Wesentlichen quer zur Längsachse (9) des Fahrzeugrahmens (2) verlaufen, sowie einen Boden (31) aufweist, wobei eine Oberseite und/oder eine Vorderseite zumindest bereichsweise mittels einer beweglichen Abdeckung (20) gebildet sind.

6. Arbeitsfahrzeug (1) nach einem der vorhergehenden Ansprüche, **dadurch gekennzeichnet, dass** die Arbeitshydraulik und mindestens eine der beiden Achsen (3, 4) ausschließlich mittels mindestens eines Elektromotors angetrieben sind.

7. Arbeitsfahrzeug (1) nach einem der vorhergehenden Ansprüche, **dadurch gekennzeichnet, dass** eine Position der mindestens einen Energiespeichereinheit (7) entlang der Längsachse (9) des Fahrzeugrahmens (2) derart gewählt ist, dass eine Gewichtskraft der Energiespeichereinheit (7) zu mehr als 50% auf die zweite Achse (4) wirkt.

8. Arbeitsfahrzeug (1) nach einem der vorhergehenden Ansprüche, **dadurch gekennzeichnet, dass** eine Motorwelle eines elektrischen Motors (33) für einen Fahrantrieb des Arbeitsfahrzeugs (1) im Wesentlichen parallel zur Längsachse (9) des Fahrzeugrahmens (2) angeordnet ist.

## Claims

1. Working vehicle (1) comprising a vehicle frame (2) which is supported by a first and a second axle (3, 4), a driver's cabin (5), a lifting arm (6) and at least one electrical energy storage unit (7), wherein the lifting arm (6) is disposed along a longitudinal direction (8) of the working vehicle (1), and the driver's cabin (5) is disposed on a first side (10) of the longitudinal axis (9) between the two axles (3, 4), and wherein at least one energy storage unit (7) is disposed between the two axles (3, 4) on a second side (11) of the longitudinal axis (9) which is opposite the first side (10), wherein
- the working vehicle is driven exclusively by means of electrical energy and that the electrical energy is stored in the at least one electrical energy storage unit (7);
**characterised in that**
- the weight distribution in relation to the longitudinal axis is balanced in such a way that the distribution on each side amounts to 50% of the total weight, with a tolerance of +/-10%, wherein weight is considered to be the weight of the operational working vehicle including a driver in the driver's cabin (2) with a weight of 80 kg;
- in relation to the longitudinal axis (9) of the vehicle frame (2), an electrically driven hydraulic pump (18) for the working functions of the working vehicle (1) is disposed on the other side (10, 11) to the at least one energy storage unit (7); and that
- the hydraulic pump (18) for the working function can be driven by means of an electric motor (19), wherein a motor shaft of the electric motor (19) is disposed transversely to the longitudinal axis (9) of the vehicle frame (2).

2. . Working vehicle (1) as claimed in claim 1, **characterised in that** the lifting arm (6) extends with a first end (12) beyond the vehicle frame (2) and at a second end (13) is pivotably connected to the vehicle frame (2) with a fastening region (14).

3. . Working vehicle (1) as claimed in claim 1 or 2, **characterised in that**, in a main travel direction (15), the fastening region (14) is disposed closer to a vehicle rear (16) than to a vehicle front (17).

4. . Working vehicle (1) as claimed in any one of the preceding claims, **characterised in that** the at least one energy storage unit (7) is covered by a cover (20), and furthermore at least one electrical or electronic component, such as for example an electronic controller (21), a contactor (22), a charge controller (23), a battery management system (24), a frequency converter (25) or a voltage transformer (26), is covered by the cover (20).

5. . Working vehicle (1) as claimed in any one of the preceding claims, **characterised in that** the vehicle frame (2) comprises a receiving space (27) for the at least one energy storage unit (7), wherein the receiving space comprises a rear wall (28) which extends substantially in parallel with the longitudinal axis (9) of the vehicle frame (2), a first side wall (29) and a second side wall (30), wherein the two side walls (29, 30) extend substantially transversely to the longitudinal axis (9) of the vehicle frame (2), and a base (31), wherein an upper side and/or a front side are formed at least in regions by means of a movable cover (20).

6. . Working vehicle (1) as claimed in any one of the preceding claims, **characterised in that** the working hydraulics and at least one of the two axles (3, 4) are driven exclusively by means of at least one electric motor.

7. . Working vehicle (1) as claimed in any one of the preceding claims, **characterised in that** a position of the at least one energy storage unit (7) along the longitudinal axis (9) of the vehicle frame (2) is selected in such a way that more than 50% of the weight of the energy storage unit (7) acts upon the second axle (4).

8. . Working vehicle (1) as claimed in any one of the preceding claims, **characterised in that** a motor shaft of an electric motor (33) for driving the travel of the working vehicle (1) is disposed substantially in parallel with the longitudinal axis (9) of the vehicle frame (2).

## Revendications

1. Véhicule de travail (1) comprenant un châssis du véhicule (2) qui est supporté par un premier et un deuxième essieu (3, 4), une cabine de conduite (5), un bras de levage (6) ainsi qu'au moins une unité de stockage d'énergie électrique (7), le bras de levage (6) étant agencé le long d'une direction longitudinale (8) du véhicule de travail (1) et la cabine de conduite (5) étant agencée sur un premier côté (10) de l'axe longitudinal (9) entre les deux essieux (3, 4), et au moins une unité de stockage d'énergie (7) étant agencée entre les deux essieux (3, 4) sur un deuxième côté (11) de l'axe longitudinal (9) qui est opposé au premier côté (10),
le véhicule de travail étant entraîné exclusivement par de l'énergie électrique et l'énergie électrique étant stockée dans l'au moins une unité de stockage d'énergie électrique (7) ;
**caractérisé en ce que**
la répartition du poids par rapport à l'axe longitudinal est équilibrée de telle sorte que la répartition de chaque côté représente 50 % du poids total, avec une tolérance de +/-10 %, le poids considéré étant le poids du véhicule de travail prêt à fonctionner, en ce compris le poids de 80 kg d'un conducteur présent dans le châssis du véhicule (2) ; une pompe hydraulique à entraînement électrique (18) pour les fonctions de travail du véhicule de travail (1) est agencée de l'autre côté (10, 11) que l'au moins une unité de stockage d'énergie (7) par rapport à l'axe longitudinal (9) du châssis du véhicule (2) ; et **en ce que** la pompe hydraulique (18) peut être entraînée par un moteur électrique (19) pour la fonction de travail, un arbre du moteur électrique (19) étant agencé transversalement à l'axe longitudinal (9) du châssis du véhicule (2).

2. Véhicule de travail (1) selon la revendication 1, **caractérisé en ce que** le bras de levage (6) s'étend au-delà du châssis du véhicule (2) par une première extrémité (12) et est relié au châssis du véhicule (2) de manière pivotante par une deuxième extrémité (13) avec une zone de fixation (14).

3. Véhicule de travail (1) selon la revendication 1 ou 2, **caractérisé en ce que** la zone de fixation (14) est agencée dans une direction principale de déplacement (15) plus près de l'arrière (16) du véhicule que de l'avant (17) du véhicule.

4. Véhicule de travail (1) selon l'une des revendications précédentes, **caractérisé en ce que** la ou les unités de stockage d'énergie (7) sont surmontées d'un couvercle (20), et **en ce que** le couvercle (20) recouvre également au moins un composant électrique ou électronique, tel qu'un système de commande électronique (21), un contacteur (22), un régulateur de charge (23), un système de gestion de batterie (24), un convertisseur de fréquence (25) ou un convertisseur de tension (26).

5. Véhicule de travail (1) selon l'une des revendications précédentes, **caractérisé en ce que** le châssis du véhicule (2) présente un espace de réception (27) pour l'au moins une unité de stockage d'énergie (7), l'espace de réception présentant une paroi arrière (28) qui s'étend essentiellement de manière parallèle à l'axe longitudinal (9) du châssis du véhicule (2), une première paroi latérale (29) et une deuxième paroi latérale (30), les deux parois latérales (29, 30) s'étendant essentiellement de manière transversale à l'axe longitudinal (9) du châssis du véhicule (2), ainsi qu'un fond (31), une face supérieure et/ou une face avant étant formées au moins par zones au moyen d'un couvercle mobile (20).

6. Véhicule de travail (1) selon l'une des revendications précédentes, **caractérisé en ce que** le système hydraulique de travail et au moins l'un des deux essieux (3, 4) sont entraînés exclusivement par au moins un moteur électrique.

7. Véhicule de travail (1) selon l'une des revendications précédentes, **caractérisé en ce qu'**une position de l'au moins une unité de stockage d'énergie (7) est choisie le long de l'axe longitudinal (9) du châssis du véhicule (2) de telle sorte qu'une force de poids de l'unité de stockage d'énergie (7) agit à plus de 50 % sur le deuxième essieu (4).

8. Véhicule de travail (1) selon l'une des revendications précédentes, **caractérisé en ce qu'**un arbre de moteur électrique (33) pour l'entraînement du véhicule de travail (1) est agencé essentiellement de manière parallèle à l'axe longitudinal (9) du châssis du véhicule (2).
